# EUROPEAN PATENT APPLICATION

(11) **EP 3 587 871 A1**
(43) Date of publication of application: **01.01.2020**
(21) Application number: 18757236.7
(22) Date of filing: 21.02.2018
(51) Int. Cl.: F16J 15/44

(54) **SEAL DEVICE**

(30) Priority: 22.02.2017 JP 2017030765
(71) Applicant: Eagle Industry Co., Ltd., Minato-ku Tokyo 105-8587 (JP)
(72) Inventor: TOKUNAGA Yuichiro, Tokyo 105-8587 (JP); INOUE Hideyuki, Tokyo 105-8587 (JP); KIMURA Wataru, Tokyo 105-8587 (JP); IGUCHI Tetsuya, Tokyo 105-8587 (JP); KASAHARA Hidetoshi, Tokyo 105-8587 (JP); HIROMATSU Jun, Tokyo 105-8587 (JP); KUROKI Yasuhiro, Tokyo 105-8587 (JP); KIKUCHI Ryu, Tokyo 105-8587 (JP)
(74) Representative: TBK
(86) International application number: PCT/JP2018/006094
(87) International publication number: WO 2018/155463

(57) **Abstract**

The present invention provides a seal device in which a floating ring can exhibit a sealing action by following the movement of a rotating shaft and can reduce vibrations in the circumferential direction and the radial direction of the rotating shaft. A seal device for sealing between a housing (11) and a rotating shaft (20) which penetrates through the housing (11) includes a floating ring (15) arranged on the rotating shaft (20) with a first gap h therebetween, and the floating ring (15) is provided with a squeeze film damper (14) with a second gap g being formed as a narrow gap between the squeeze film damper (14) and the housing (11).

## Description

### Technical Field

The present invention relates to a seal device for sealing between a housing and a rotating shaft which penetrates through the housing, and, particularly, relates to a seal device provided with a floating ring used for the rotating shaft of a fluid machine such as a pump.

### Background Art

Conventionally, in a rotating fluid machine such as a pump, a floating seal is used for sealing a fluid, and, for example, the one shown in FIG. 3 is known (Hereinafter, referred to as "a conventional art 1". For example, see Patent Document 1.). The conventional art is provided with a rotating shaft 45 of a fluid machine, a sleeve 44 attached to the outer periphery of the rotating shaft 45 and rotating integrally with the rotating shaft, a seal ring 41 loosely fitted with a clearance to the sleeve 44, leaf springs 46 provided at four places on the outer circumference of the seal ring 41, and a retainer 42 for storing the seal ring 41, and the seal ring 41 is supported by the leaf springs 46 in a state that projections 46A of the leaf springs 46 are engaged with grooves 42A provided in the retainer 42. Then, by a wedge effect (an effect of dynamic pressure generated in a wedge part) and a Lomakin effect (when seal differential pressure occurs, an aligning effect due to flow loss of a fluid between a seal ring and a shaft) generated between an inner circumferential surface of the seal ring 41 and the sleeve 44 of the rotating shaft 45, a gap between the inner circumferential surface of the seal ring 41 and the rotating shaft 45 is maintained constant, and the seal ring 41 is pushed axially to the retainer 42 side from a high-pressure fluid side and the seal ring 41 and the retainer 42 are sealed. Moreover, since viscous friction occurs between the rotating shaft 45 and the seal ring 41, when the rotating shaft 45 rotates, a turning force acts on the seal ring 41. Therefore, a whirl-stop pin 43 attached to the seal ring 41 is inserted in a hole 49 of the retainer, the whirl-stop pin 43 contacts the hole 49 of the retainer, and the movement in the rotational direction of the seal ring 41 with respect to the retainer 42 is restricted.

### CITATION LIST

### PATENT DOCUMENTS

Patent Document 1: JP 57-154562 A

### SUMMARY OF THE INVENTION

### Problem to be Solved by the Invention

In Patent Document 1, the seal ring 41 is elastically supported to the retainer 42 via the leaf spring 46. However, only the leaf spring 46 cannot obtain adequate damping force. Therefore, if the rotating shaft 45 whirls largely, the whirl-stop pin 43 attached to the seal ring 41 impulsively contacts a wall surface of the hole of the retainer, and when operated for a long time, surface roughness is generated on a surface of the whirl-stop pin 43 and the wall surface of the retainer hole, so there is a fear that the whirl-stop pin 43 cannot move smoothly with respect to the retainer hole. As a result, the seal ring 41 is restrained in the retainer 42, and the seal ring 41 cannot follow the movement of the rotating shaft 20, so the rotating shaft and the seal ring may be damaged by contact thereof, and the radial gap may become larger than an optimum value, therefore there was a fear that proper sealing action cannot be obtained.

Moreover, it is conceivable that by providing a radial elastic support means and a circumferential elastic support means, the seal ring 41 is supported in both directions, but there is also a problem that since a seal device becomes complicated and oversized, it becomes difficult to incorporate the seal device into the other rotating fluid machine.

The present invention has been made in view of such problems, and an object thereof is to provide a seal device in which a floating ring can exhibit a sealing action by following the movement of a rotating shaft and can reduce vibrations in the circumferential direction and the radial direction of the rotating shaft.

### Means for Solving Problem

In order to solve the problem, a seal device according to a first aspect of the present invention is a seal device for sealing between a housing and a rotating shaft which penetrates through the housing, and the seal device is characterized in that
the seal device includes a floating ring arranged on the rotating shaft with a first gap therebetween, and
the floating ring is provided with a squeeze film damper with a second gap being formed as a narrow gap between the squeeze film damper and the housing.

According to the first aspect, even if the rotating shaft whirls, by the squeeze film damper, the floating ring is biased to central direction vertical to an inner circumferential surface of the housing and a damping force is applied thereto, and therefore, it is possible to reduce vibrations in the radial direction and the circumferential direction of the floating ring, and it is possible to exhibit sealing properties while maintaining a proper gap with respect to the rotating shaft.

The seal device according to a second aspect of the present invention is characterized in that the second gap is 0.1 to 0.3 mm.

According to the second aspect, the floating ring can efficiently exhibit a vibration damping function with respect to the rotating shaft, and assembly of the seal device is facilitated.

### BRIEF DESCRIPTION OF THE DRAWINGS

FIG. 1 is a front cross-sectional view of a seal device according to an embodiment of the present invention.
FIG. 2 is a drawing schematically showing an A-A cross-sectional view (a side cross-sectional view) of FIG. 1, and is a drawing illustrating the principle of a squeeze film damper.

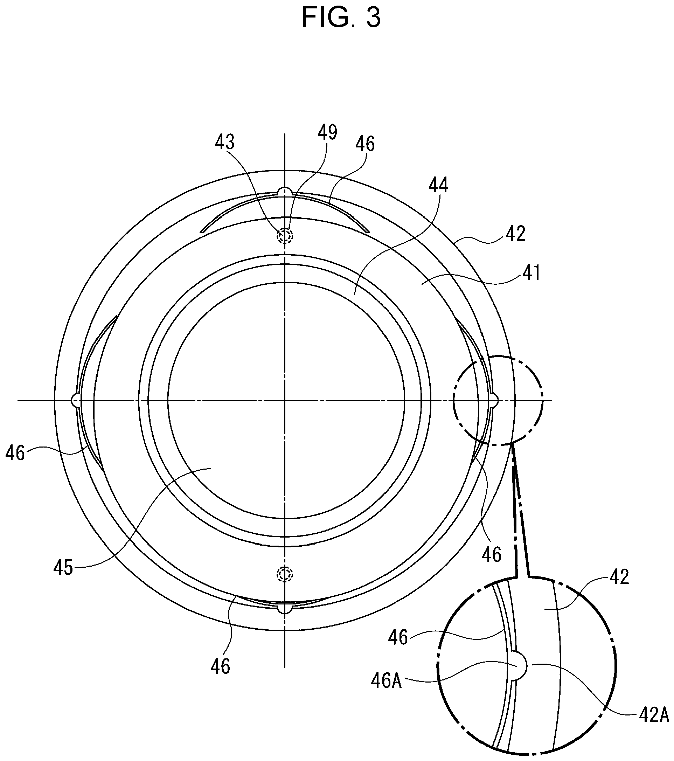

FIG. 3 is a side cross-sectional view of a conventional seal device.

### DESCRIPTION OF EMBODIMENTS

Although an embodiment of a seal device according to the present invention will be described in detail with reference to the drawings, the present invention shall not be interpreted as being limited thereto, and a variety of changes, amendments, or improvements could be added based on the knowledge of a person skilled in the art without departing from the scope of the present invention.

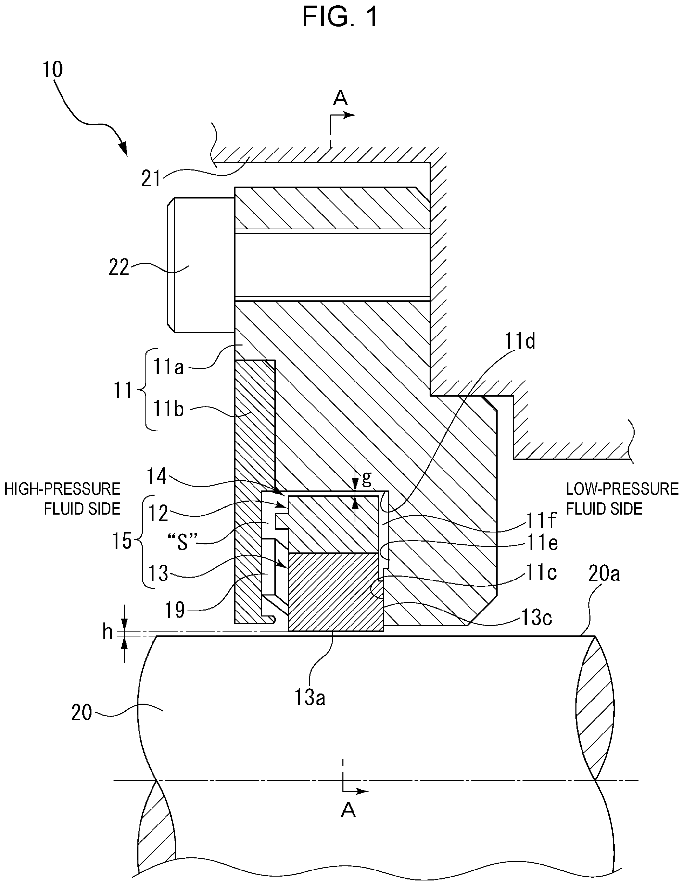

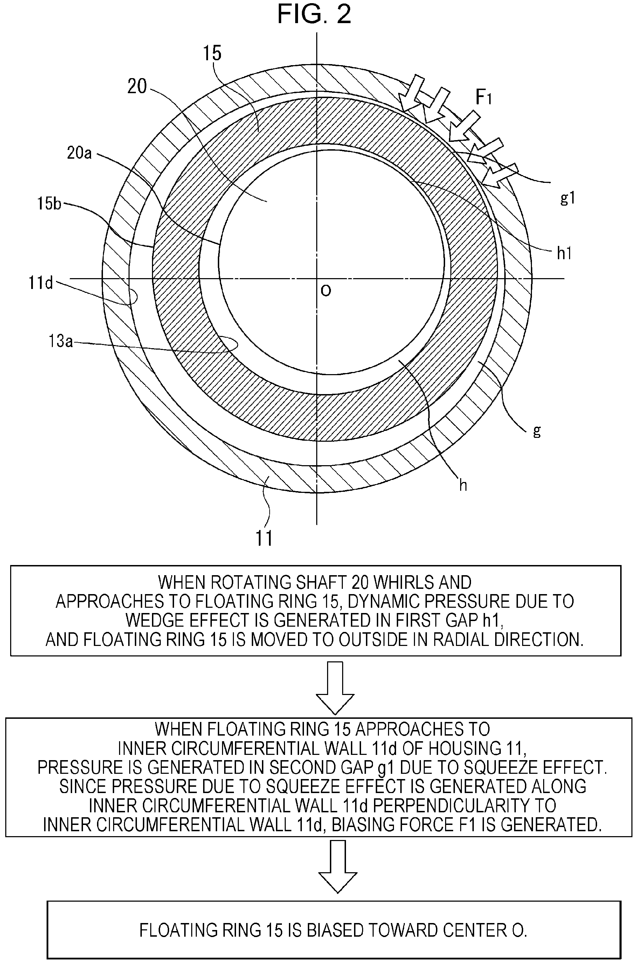

A seal device 10 according to an embodiment of the present invention will be described with reference to FIG. 1 and FIG. 2. A rotating shaft 20 of a fluid machine is arranged so as to penetrate through a casing 21, and the left side is considered as a high-pressure side, while the right side is considered as a low-pressure side. The seal device 10 is mainly composed of a floating ring 15 disposed on the outer circumference of the rotating shaft 20 with a first gap h therebetween, and a housing 11 for storing the floating ring 15 with a second gap g therebetween.

The housing 11 is mainly formed of a holder 11a and a flange 11b, and the holder 11a is fixed to the casing 21 by a fastening means 22. The holder 11a and the flange 11b each has a predetermined gap with the rotating shaft 20 and has a hole through which the rotating shaft 20 penetrates. On the inner diameter side of the holder 11a, there is a storage part 11f surrounded by cylindrical inner circumferential wall 11d and radial wall 11e. Then, in a space S surrounded by the inner circumferential wall 11d of the housing 11, the radial wall 11e and the flange 11b each of which partitions the axial direction of the inner circumferential wall 11d, and the rotating shaft 20 which penetrates through the housing 11, the floating ring 15 is stored. Further, the radial wall 11e has, on the inner diameter side thereof, a holder side secondary sealing surface 11c slightly protruding in the axial direction from the radial wall 11e, and the holder side secondary sealing surface 11c and a seal ring side secondary sealing surface 13c (described later) are adhered to form a secondary seal as a sealing means.

The floating ring 15 is an annular member having a generally rectangular cross-section, and is mainly composed of a seal ring 13, and a retainer 12 fitted to the outer circumference of the seal ring 13.

The seal ring 13 is a circular ring-shaped member having a generally rectangular cross-section, and is made up of a material with good sliding property, such as carbon. An inner circumferential surface 13a of the seal ring 13 is formed into a cylindrical surface having the minute first gap h with respect to an outer circumferential surface 20a of the rotating shaft 20.

The retainer 12 is made up of not only metals such as stainless, steel, copper, and aluminum, but also materials with good sliding property such as plastic, synthetic resin, or FRP reinforced with carbon fiber or glass fiber, and is a circular ring-shaped member having a generally rectangular cross-section. From a standpoint of weight saving, it is more advantageous for the retainer 12 to be made up of aluminum, plastic, synthetic resin, and FRP. The outer circumference of the retainer 12 is a cylindrical surface formed into same diameter, and has a minute second gap g with respect to the inner circumferential wall 11d of the housing 11. Moreover, the retainer 12 is interference-fitted to the outer circumference of the seal ring 13 made up of carbon or the like, thereby applying a compressive force to the seal ring 13. Thereby, even if the seal ring 13 is made up of a brittle material such as carbon, breakage of the seal ring 13 due to contact with the rotating shaft 20, and the like can be prevented.

The floating ring 15 loosely fitted to the outer circumference of the rotating shaft 20 which penetrates through the housing 11 is disposed in the space S of the housing 11. In a state that the floating ring 15 is stored in the space S, the outer circumferential surface 20a of the rotating shaft 20 and the inner circumferential surface 13a of the floating ring 15 has the first gap h, and an outer circumferential surface 12a of the floating ring 15 and the inner circumferential wall 11d of the housing 11 has the second gap g. Moreover, an air gap between the space S and the floating ring 15 is filled with a fluid to be sealed, a gap part between the outer circumferential surface 20a of the rotating shaft 20 and the inner circumferential surface 13a of the floating ring 15 forms a seal part, and a gap part between the outer circumferential surface 12a of the floating ring 15 and the inner circumferential wall 11d of the housing 11 constitutes a squeeze film damper 14.

Here, the first gap h between the outer circumferential surface 20a of the rotating shaft 20 and the inner circumferential surface 13a of the floating ring 15 is determined from one-half of the difference of the inner diameter of the floating ring 15 and the outer diameter of the rotating shaft 20. On the other hand, the second gap g between the outer circumferential surface of the floating ring 15 and the inner circumferential wall 11d of the housing 11 is determined from one-half of the difference between the outer diameter of the floating ring 15 and the inner diameter of the inner circumferential wall 11d of the housing 11. Although the first gap h and the second gap g are determined by the temperature and the viscosity of the fluid to be sealed, the circumferential velocity of the rotating shaft 20, and the like, the first gap h and the second gap g are formed in a range of 0.5 ≤ g/h ≤ 2. Thereby, by the fluid coming in and out of the first gap h and the second gap g, large vibration suppression force and damping force are generated. Specifically, the second gap g is in a range of 0.1 mm to 0.3 mm, and preferably is 0.2 mm.

Moreover, as to the seal ring 13 of the floating ring 15, by a biasing means 19 such as a spring, the seal ring side secondary sealing surface 13c is pushed to the holder side secondary sealing surface 11c and adhered thereto, thereby sealing between the seal ring 13 and the holder 11a. Since the seal ring 13 made up of a material with good sliding property contacts the biasing means 19 and the holder side secondary sealing surface 11c, the floating ring 15 can prevent the fixing between the biasing means 19 and the holder 11a, and the movement of the floating ring 15 is not restrained. Hereinafter, a sealing means by adhesion between the seal ring side secondary sealing surface 13c and the holder side secondary sealing surface 11c will be described as a secondary seal.

The operation of the seal device 10 as thus constituted will be described.

During stop of the rotating shaft 20, for example, by the influence of the self-weight of the floating ring 15, the first gap h is small on the upper side and is large on the lower side. However, when the rotating shaft 20 rotates, the fluid is drawn by the viscosity of the fluid into a tapered portion on the upper side where the gap is small, and dynamic pressure due to a wedge effect is generated, so the floating ring 15 floats above the rotating shaft 20, and is aligned such that the first gap h is uniform.

Next, the operation of the seal device 10 when the rotating shaft 20 whirls largely due to vibration will be described with reference to FIG. 2. In FIG. 2, the rotating shaft 20 rotates with respect to the housing 11, and the floating ring 15 stands still with respect to the housing 11 by a whirl-stop (not shown) . Moreover, the first gap h between the outer circumferential surface 20a of the rotating shaft 20 and the inner circumferential surface 13a of the floating ring and the second gap g between the outer circumferential surface 13b of the floating ring 15 and the inner circumferential wall 11d of the housing 11 are filled with the fluid. A portion where the rotating shaft 20 is closest to the inner circumferential surface 13a of the floating ring 15 will be described as a first gap h1, and a portion where the outer circumferential surface 13b of the floating ring 15 is closest to the inner circumferential wall 11d of the housing 11 will be described as a second gap g1.

When the rotating shaft 20 approaches to the inner circumferential surface 13a of the floating ring 15, dynamic pressure due to a wedge effect is generated in the first gap h1, and the floating ring 15 is moved to the outside in a radial direction. When the floating ring 15 approaches to the inner circumferential wall 11d of the housing 11, the fluid is rapidly pushed out of the second gap g1, and pressure and a damping force are generated due to a squeeze effect in the second gap g1. Since the pressure due to the squeeze effect is generated along the inner circumferential wall 11d so as to be directed to a center O of the housing 11 perpendicularly to the inner circumferential wall 11d, a biasing force F1 having components in the radial direction and the circumferential direction is generated. Thus, the squeeze film damper 14 of the present invention biases the floating ring 15 in the radial direction and the circumferential direction with a simple configuration, so it is also possible to reduce vibrations in the radial direction and the circumferential direction of the rotating shaft 20 via the floating ring 15.

The present invention exhibits the following excellent effects.

Even if the first gap h between the outer circumferential surface 20a of the rotating shaft 20 and the inner circumferential surface 13a of the floating ring is non-uniform, when the rotating shaft 20 rotates, the fluid is drawn by the viscosity of the fluid into a wedge part at a portion where the gap is narrow, and dynamic pressure due to a wedge effect is generated, so the floating ring 15 floats above the rotating shaft 20, and is aligned such that the first gap h is nearly equal. Moreover, the seal ring 13 is made up of a material such as carbon with good sliding property, so wear of the seal ring 13 can be prevented, and the first gap h can be maintained, and therefore a favorable sealed state can be obtained.

The pressure by the squeeze film damper 14 generated in the second gap g between the floating ring 15 and the inner circumferential wall 11d is generated along the inner circumferential wall 11d so as to be directed to the center O of the housing 11 perpendicularly to the inner circumferential wall 11d. That is, with a simple configuration, it is possible to generate a radial biasing force with respect to the floating ring 15.

Even if the rotating shaft 20 whirls, by the squeeze film damper 14, a biasing force and a damping force are applied in the radial direction and the circumferential direction to the floating ring 15, so the rotating shaft 20 can reduce vibrations in the radial direction and the circumferential direction via the floating ring 15.

Since the seal ring 13 is made up of a material excellent in self-lubricating property and sliding property such as carbon, even if the seal ring 13 is always relatively displaced with the holder side secondary sealing surface 11c during operation, it is possible to prevent wear, surface roughness, and the like, and it is possible to maintain the function of the secondary seal for a long time. Moreover, the seal ring 13 made up of a material with good sliding property contacts the biasing means 19 and the holder 11a, so even if the floating ring 15 is relatively displaced with respect to the biasing means 19, the floating ring 15 is not fixed to the biasing means 19 and the holder 11a, and the movement of the floating ring 15 is not restrained.

Hereinbefore, the embodiment of the present invention has been described with reference to the drawings, but the specific configuration is not limited to the embodiment. The present invention also includes any changes or additions made within a scope that does not depart from the spirit of the present invention.

For example, in the above embodiment, the floating ring 15 is integrally configured as an annular shape, but is not limited thereto, and the parts configured by being divided in the circumferential direction may be integrally assembled to an annular shape.

In the above embodiment, although the floating ring 15 is biased by the biasing means 19, the secondary seal may be configured by further adhering the seal ring side secondary sealing surface 13c and the holder side secondary sealing surface 11c by means of pressure from the high-pressure fluid side to the low-pressure fluid side without using the biasing means 19.

Moreover, the present invention uses a seal device as a main purpose, but may be used as a damping device for damping vibration of a shaft.

### Reference Signs List

- 10: seal device
- 11: housing
- 11a: holder
- 11b: flange
- 12: retainer
- 13: seal ring
- 14: squeeze film damper
- 15: floating ring
- 19: biasing means
- 20: rotating shaft
- 21: casing
- 22: fastening means
- S: space
- h: first gap
- g: second gap

## Claims

1. A seal device for sealing between a housing and a rotating shaft which penetrates through the housing, the seal device being **characterized in that**
the seal device includes a floating ring arranged on the rotating shaft with a first gap therebetween, and
the floating ring is provided with a squeeze film damper with a second gap being formed as a narrow gap between the squeeze film damper and the housing.

2. The seal device according to claim 1, **characterized in that** the second gap is 0.1 to 0.3 mm.
